# NEUE EUROPÄISCHE PATENTSCHRIFT

(11) **EP 1 314 620 B2**
(45) Veröffentlichungstag und Bekanntmachung des Hinweises auf die Entscheidung über den Einspruch: **20.08.2008**
(45) Hinweis auf die Patenterteilung: 05.10.2005
(21) Anmeldenummer: 02025432.2
(22) Anmeldetag: 15.11.2002
(51) Int. Cl.: B60R 21/20

(54) **Mittel zur Befestigung eines Airbagmoduls in einem Kraftfahrzeug**
Means for fixing an airbag module in a motor vehicle
Moyens pour fixer un module d'airbag dans un véhicule à moteur

(30) Priorität: 21.11.2001 DE 10157043
(43) Veröffentlichungstag der Anmeldung: 28.05.2003
(73) Patentinhaber: ADAM OPEL AG, 65423 Rüsselsheim (DE)
(72) Erfinder: Rick, Ulrich, Dipl.-Ing., 55595 Roxheim (DE)
(74) Vertreter: Quermann, Helmut

(56) Entgegenhaltungen:
- EP-A- 0 771 696
- EP-A- 1 103 430
- WO-A-01/23223
- WO-A-01/72558
- WO-A-99/44866
- DE-A- 19 503 816
- DE-U- 20 017 527
- DE-U- 29 806 933
- DE-U- 29 908 967
- US-A- 5 380 037
- PATENT ABSTRACTS OF JAPAN vol. 016, no. 471 (M-1318), 30. September 1992 (1992-09-30) -& JP 04 169357 A (TOYOTA MOTOR CORP), 17. Juni 1992 (1992-06-17)

## Beschreibung

Die Erfindung betrifft Mittel zur lösbaren Befestigung eines Airbagmoduls in einem Kraftfahrzeug gemäß dem Oberbegriff des Patentanspruches 1.

Airbagmodule werden heute standardmäßig als Fahrer-, Beifahrer- und gegebenenfalls auch Seitenairbags in Kraftfahrzeuge in der Funktion als Rückhaltesystem bei Unfällen eingebaut. Der Einbau der Airbagmodule bei der Fahrzeugproduktion ist demnach bei jedem Neufahrzeug mehrfach vorzunehmen und verursacht einen erheblichen Montageaufwand.

Es ist üblich, das Airbagmodul auf der Fahrerseite von hinten am Skelett des Lenkrads zu verschrauben. Es handelt sich hierbei um einigen Montageaufwand, da der Arbeitsbereich hinter dem Lenkrad schwer zugänglich und überdies der Bewegungsfreiraum stark eingeschränkt ist, insbesondere durch die Armaturentafel und die Lenksäulenverkleidung.

Es kommt daher bei der Airbagmodulmontage häufig zu Beschädigungen an den Schraubengewinden. Dies erfordert den Austausch des gesamten Airbagmoduls, da die Gewinde in den Airbagmodulen angeordnet sind. Des Weiteren kommt es des öfteren zu Beschädigungen am Lenkrad oder den angrenzenden Verkleidungselementen aufgrund eines missglückten Werkzeugeinsatzes in dem schwer zugänglichen und engen Arbeitsbereich.

Aus der DE 296 16 916 ist ein Gassack-Modul für ein Fahrzeuginsassen-Rückhaltesystem bekannt, dessen Bauteile durch Montageschrauben miteinander verbunden sind. An ihrem unteren aus dem Gassack-Modul herausragenden Ende weisen diese Schrauben jeweils eine in Umfangsrichtung verlaufende Nut auf. Diese unteren freien Enden der Montageschrauben werden in geeignete Haltebohrungen im für die Befestigung vorgesehenen Fahrzeugteil eingeführt. Senkrecht zu den Haltebohrungen sind in diesem Fahrzeugteil Arretierbohrungen angeordnet, welche das Einbringen von Arretierstiften derart ermöglichen, dass diese in die Nuten der Montageschrauben eingreifen und das Gassack-Modul somit am Fahrzeugteil befestigen. Der Nachteil einer solchen Befestigung ist zum einen die Verbindung von Airbagzusammenbau und -einbau. Es sind hier die selben Schrauben für den Zusammenhalt der Airbagkomponenten verantwortlich, die diesen dann auch am Fahrzeugteil befestigen sollen. Diese Schrauben werden durch Muttern unterseitig an einer den Gasgenerator tragenden Montage-platte mit dem Gassack-Modul fixiert und ausgerichtet, wobei die Ausrichtung der unteren der Befestigung des Gassack-Moduls dienenden Enden der Schrauben von der Ausrichtung der Schrauben insgesamt abhängt. Es führen hierbei schon leichte Abweichungen zu Problemen beim Einführen der Schrauben in die zugeordneten Haltebohrungen. Zudem erfordert dieses Befestigungssystem zusätzliche Arretierbohrungen senkrecht zu den Haltebohrungen, welche so im Fahrzeugteil anzuordnen sind, dass sie zum Einführen der Arretierstifte bei der Montage zugängliche Öffnungen aufweisen. Insgesamt sind diese Gassack-Module in ihrer Befestigung sowohl von der Montage als auch von der Konstruktion her zu aufwendig.

Aus der DE 296 21 295 ist eine Vorrichtung zur Befestigung eines Airbagmoduls im Lenkrad bekannt, bei welcher ein passives und ein aktives Rastelement eingesetzt werden. Der Erfindungsgedanke ist hierbei, dass ein schwenkbares oder verschiebbares starres Bauteil als aktives Rastelement im Lenkradskelett angeordnet ist. Es ist zur Betätigung dieses starren Bauteils ein Federkörper am Lenkradskelett befestigt, welcher an diesem Bauteil angreift und mit diesem das aktive Rastelement bildet. Es ist hierfür im Bereich der Speichen des Lenkradskeletts eine Aufnahme für die Unterbringung des aktiven Rastelementes angegossen.

Somit besteht diese Vorrichtung immer aus einem starren Bauteil welches durch einen Federkörper bewegt wird, wobei das starre Bauteil in seiner am Lenkradskelett befestigten Aufnahme entweder gelenkig gelagert oder verschiebbar geführt sein muss. Es ergibt sich hieraus ein hoher konstruktiver Aufwand, der durch die Verbindung von starrem Bauteil und Federkörper zum einen und durch die Führung bzw. Anlenkung des starren Bauteils an dessen am Lenkradskelett vorgesehener Aufnahme zum anderen resultiert. Daraus ergeben sich weitere Nachteile in Bezug auf den Platzbedarf, die Kosten und das Gewicht dieser Befestigungsvorrichtung.

Dies trifft ebenfalls auf die in der EP 0 771 696 offenbarte Befestigungsvorrichtung eines Airbagmoduls zu. Auch hier sind ein aktives und ein passives Rastelement im Einsatz, wobei das aktive Rastelement an einem Trägerbauteil des Fahrzeugs befestigt ist. Das aktive Rastelement ist ebenfalls aus einem starren Bauteil in Form von Rasthaken und aus diesen Rasthaken bewegenden Federn gebildet. Diese Kombination aus Rasthaken und Federn ist in einem Kasten untergebracht, welcher am Trägerbauteil befestigt ist. Als passives Rastelement ist am Airbaggehäuse ein Bolzen angebracht, welcher durch eine Öffnung in dem das aktive Rastelement aufnehmenden Kasten eingeführt und eingerastet wird. Es handelt sich demnach bei dem aktiven Rastelement um einen kompliziert aufgebauten, mehrgliedrigen Körper, welcher an der dem Airbagmodul zugewandten Seite eines Trägerbauteils zu befestigen ist und somit ebenfalls die oben genannten Nachteile aufweist.

Aus der gattungsbildenden US 5 380 037 sind Mittel zur lösbaren Befestigung eines Airbagmoduls am Kraftfahrzeug mit an der Gehäuserückwand des Airbagmoduls angeordneten mit einer Rastaussparung versehenen Haltezapfen mit in Richtung der Längsachse der Haltezapfen (1) wirkenden Federkörpern bekannt, wobei geeignete Aufnahmeöffnungen für die Haltezapfen in einem Trägerbauteil des Kraftfahrzeugs angeordnet sind und auf der Unterseite des Trägerbauteils an den Aufnahmeöffnungen Schenkelfedern befestigt sind.

Die DE 298 06 933 U1 beschreibt ein Handwerkzeug zum Lösen eines Pralltopfs, mit dem ein gezieltes Herausdrücken der Federelemente aus den Aussparungen der Rastbolzen der Befestigung erzielt wird. Erreicht wird dies durch einen winklig gebogenen Schafft, dessen einer Schenkel den Handgriff bildet und dessen anderer Schenkel mit einer Hinterschneidung versehen ist, mit welcher das Federelement der Lenkradnabe hintergreifbar ist.

Die DE 200 17 527 U1 offenbart ein Airbag-Modul, das durch zwei Rastverbindungen mit dem Lenkradskelett verbunden ist, wobei hier der Erfindungsgedanke darin liegt, dass das Airbag-Modul zur Betätigung der Hupe des Fahrzeugs verschiebbar ist. Auch hier ist ein zweischenkliges Federelement offenbart zur Bewirkung der Rastverbindung.

Schließlich zeigt die DE 299 08 967 U1 eine weitere Rastverbindung zwischen einem Airbag-Modul und einem Lenkrad wobei hier eine zweischenklige Feder als Rastelement auf der Unterseite des das Airbag-Modul aufnehmenden Gehäuses angeordnet ist. Hierbei ist der eine Schenkel der Feder kurz ausgebildet und stützt sich an einem Widerlager des Gehäuses ab, wohingegen der zweite deutlich längere Schenkel der Feder als beweglicher Schenkel ausgebildet ist und die Rastverbindung zum Airbag-Modul bewirkt.

Der aufgezeigte Stand der Technik weist somit bereits zweischenklige Federelemente zur Rastverbindung des Airbag-Moduls auf. Allerdings weisen diese Lösungen den Nachteil auf, dass keine sichere und stabile und gleichzeitig konstruktiv einfache Befestigung des Federelementes bzw. des festen Schenkels des Federelementes offenbart ist.

Vor diesem Hintergrund liegt der Erfindung die Aufgabe zu Grunde, Mittel zur lösbaren Befestigung eines Airbagmoduls in einem Kraftfahrzeug zu schaffen, welche bei geringem konstruktiven Aufwand eine leichte Montage und Demontage des Airbagmoduls ermöglicht, wobei die Befestigung einer eine Rastverbindung erzeugenden Schenkelfeder an einem das Airbag-Modul tragenden Bauteil auf einfache und sichere Weise erreicht werden soll. Es soll sich gleichzeitig um eine sichere, lagestabile und wartungsfreie sowie schwingungsarme und geräuschfreie Airbagmodulbefestigung handeln, welche bei geringem Gewicht geringe Materialkosten verursacht. Zudem sollen durch die Befestigungsmittel Fertigungstoleranzen ausgeglichen werden.

Die Aufgabe wird erfindungsgemäß gelöst durch die Mittel zur lösbaren Befestigung eines Airbagmoduls in einem Kraftfahrzeug gemäß Patentanspruch 1.

Als Befestigungskörper sind mehrere hakenförmige, mit einer Rastaussparung, zweckmäßigerweise einer Rastnut, versehene Haltezapfen an der Gehäuserückwand des Airbagmodulgehäuses angeordnet, welche zur Befestigung an geeigneten Befestigungspunkten an einem Trägerbauteil des Kraftfahrzeugs dienen.

Mit den Haltezapfen korrespondierend sind geeignete Aufnahmeöffnungen für die Haltezapfen im Trägerbauteil des Kraftfahrzeugs angeordnet. Es sind hierfür keine speziellen Aufnahmekörper an dem Trägerbauteil erforderlich, da die Aufnahmeöffnungen als Durchbrechungen im Trägerbauteil angeordnet sind. Es handelt sich daher diesbezüglich um eine Lösung mit minimalem konstruktiven Aufwand.

Auf der Unterseite des Trägerbauteils sind Schenkelfedern angeordnet. Diese Schenkelfedern bestehen aus einem feststehenden, an dem Trägerbauteil befestigten Schenkel und einem radial beweglichen Schenkel. Die Schenkelfedern sind hierbei derart an der Unterseite der Aufnahmeöffnungen für die Haltezapfen angeordnet, dass der bewegliche Schenkel der Schenkelfeder bei der Montage des Airbagmoduls erst durch eine abgeschrägte Eingriffskante am Vorderteil des Haltezapfens gespreizt wird, um bei Erreichen der Einrastposition des Haltezapfens in dessen Rastaussparung einzugreifen. Die am Trägerbauteil befestigten Schenkelfedern erfüllen somit die Funktion eines aktiven Rastelements mit nur einem Bauteil, was eine starke konstruktive Vereinfachung sowie eine Reduzierung des Gewichts und der Kosten bedeutet. Durch die unterseitige Anordnung der Schenkelfedern am Trägerbauteil kann zudem eine Raumersparnis erreicht werden, da zwischen dem Trägerbauteil und der Rückwand des Airbagmodulgehäuses keine weiteren Befestigungsmittel angeordnet sind.

Die Schenkelfeder ist nun nach der Erfindung mittels aus dem Trägerbauteil verprägter bzw. ausgestellter Aufnahme- und Gegentaschen am Trägerbauteil befestigt. Die Aufnahme- und Gegentaschen sind alternierend angeordnet, wobei zur Befestigung des feststehenden Federschenkels eine Aufnahmetasche mit zwei benachbarten Gegentaschen ausreicht. Der feststehende Schenkel wird in die Taschen eingeschoben und durch Verprägung der Taschen gegeneinander kraft- und formschlüssig mit dem Trägerbauteil verbunden. Es ist hierbei vorteilhaft, dass als Trägerbauteil ein Trägerblech verwendet wird, da so der zuvor beschriebene Befestigungsvorgang der Schenkelfeder leicht durchzuführen ist. Dieses Trägerblech ist bei einer beispielhaften Anwendung der Befestigungsvorrichtung zum Einbau eines Fahrerairbags fest am Boden der Lenkradnabe montiert. Auf diese weise ist die Aufgabenstellung der einfachen und gleichzeitig sicheren Befestigung der Schenkelfeder am Trägerbauteil gelöst.

Um die Haltezapfen sind in Richtung der Längsachse der Haltezapfen wirkende Federkörper angeordnet. Es sind hierbei vorzugsweise Schraubenfedern eingesetzt, welche bei der Montage des Airbagmoduls zwischen der Rückwand des Airbagmodulgehäuses und dem Trägerbauteil des Kraftfahrzeugs zusammengedrückt werden. Durch diese Verspannung in Richtung der Längsachse der Haltezapfen werden Schwingungen und daraus resultierende Geräusche während der Fahrt vermieden und ein fester Sitz des Airbagmoduls sichergestellt.

Es ist ein weiterer Vorteil der erfindungsgemäßen Befestigungsmittel, dass diese bei der Montage Fertigungstoleranzen sowohl in axialer Richtung durch die Verwendung der Schraubenfedern als auch in radialer Richtung durch die Verwendung der Schenkelfedern zulassen. Es treten hierdurch keine Probleme bei der Montage aufgrund geringer Abweichungen bei der Fertigung der Befestigungsmittel auf. Dies erlaubt eine Trennung in der Bauteilfertigung, so dass unterschiedliche Lieferanten mit der Herstellung des Airbaggehäuses und der Trägerplatte mit Schenkelfedern betraut werden können.

Zudem handelt es sich um wartungsfreie Befestigungsmittel, welche einen leichten Austausch des Airbagmoduls zulassen. Es muss hierfür auf der Rückseite des Trägerbauteils lediglich der radial bewegliche Schenkel der Schenkelfeder beispielsweise mit einem herkömmlichen Schraubendreher aus der Rastnut herausgespreizt werden. Durch die Vorspannung der Schraubenfeder wird der Haltezapfen aus der Rastposition bewegt. Es ist damit möglich, die Haltezapfen einfachheitshalber nacheinander aus der Befestigung zu lösen, wodurch ein gleichzeitiges Spreizen der Schenkelfedern nicht erforderlich ist. Es wird bei dieser Demontage kein Befestigungsmittel beschädigt, wodurch ein mehrfacher Ein- und Ausbau der Airbagmodulgehäuse ohne Wartung bzw. Austausch der Befestigungsmittel möglich ist.

Vorzugsweise weist die Schenkelfeder zwei in etwa parallele Schenkel auf, wobei die Federschenkel endseitig durch eine Federdoppelwicklung verbunden sind. Der radial bewegliche Schenkel der in etwa U-förmigen Schenkelfeder wird bei der Montage des Airbagmoduls erst von dem festen Schenkel weg nach außen gespreizt, so dass die Schenkelfeder in etwa v-förmig gespreizt ist. Nach Erreichen der Einrastposition rastet der bewegliche Schenkel der Schenkelfeder in die Rastnut des Haltezapfens ein, wobei die Schenkelfeder wieder ihre in etwa U-förmige Ausgangsform aufweist und beide Schenkel der Feder am Haltezapfen anliegen.

Es ist zweckmäßig, dass der radial bewegliche Schenkel der Schenkelfeder von mindestens einem an dem Trägerbauteil angeordneten Führungsbügel geführt wird. Der Führungsbügel ist hierbei vorteilhafterweise streifenförmig aus dem Trägerbauteil verprägt bzw. ausgestellt. Die Führungsbügel sichern bei der Montage des Airbagmoduls, dass der bewegliche Schenkel der Schenkelfeder von dem senkrecht zur radialen Bewegung des Federschenkels eingeführten Haltezapfen nicht aus seiner Bewegungsebene parallel zum Trägerblech herausgedrückt wird. Die Führungsbügel definieren somit den Bewegungsspielraum der radial beweglichen Schenkel der Schenkelfedern und bewirken, dass diese Federschenkel sicher in die Rastnut der Haltezapfen bei Erreichen der Rastposition eingreifen.

Eine weitere Sicherung gegen eventuelle Geräuschentwicklung durch Schwingungen in der Airbagmodulbefestigung wird erfindungsgemäß erreicht durch eine Kunststoffummantelung der Haltezapfen. Hierdurch werden zusätzlich Schwingungen, welche zwischen den Befestigungskomponenten im Fahrbetrieb entstehen könnten, vermieden.

Zweckmäßigerweise sind in einer Bauform der Erfindung zwei Haltezapfen mit Schraubenfedern an der Rückseite des Airbagmodulgehäuses symmetrisch angeordnet. Die Rastnuten an den Haltezapfen weisen hierbei nach innen und liegen sich gegenüber. Dementsprechend sind auch die Schenkelfedern auf der Unterseite des Trägerblechs mit dem feststehenden Schenkel außen und dem radial beweglichen Schenkel innen angeordnet, wodurch die beweglichen Schenkel bei der Airbagmodulmontage zur Trägerblechmitte und gegeneinander gespreizt werden. Eine solche Anordnung der Befestigungsmittel gewährleistet die angestrebte sichere und lagestabile Befestigung.

Serviceöffnungen zu den auf der Unterseite des Trägerbauteils befestigten Schenkelfedern sind zweckmäßigerweise, beispielsweise auf der Lenkradrückseite, zur Demontage des Airbagmodulgehäuses angeordnet. Durch diese Serviceöffnungen wird zur Demontage des Airbagmoduls der bewegliche Schenkel der Schenkelfeder aus der Rastnut des Haltezapfens herausgespreizt, beispielsweise unter Zuhilfenahme eines Schraubendrehers.

Hierbei ist es vorteilhaft, dass diese Serviceöffnungen zu den Schenkelfedern mit einem Verschluss versehen sind. Es soll hierdurch ein unbefugter Zugriff auf das Airbagmodul verhindert werden, um beispielsweise einen Diebstahl des Airbagmoduls oder auch eine unsachgemäße Reparatur zu unterbinden. Als Verschluss können nur durch Spezialwerkzeug zu öffnende Verschlusskörper in die Serviceöffnung eingesetzt, oder die Serviceöffnungen zu den Schenkelfedern durch Ausspritzen mit Kunststoff verschlossen sein. In beiden Fällen ist ein unbefugter Zugriff auf die Befestigungsmittel und somit ein Demontieren des Airbagmoduls wirksam unterbunden.

Nachfolgend wird ein Ausführungsbeispiel der Erfindung anhand einer Zeichnung näher beschrieben. Es zeigen
- Figur 1: die Rückseite eines Airbagmoduls in perspektivischer Ansicht,
- Figur 2: einen Schnitt durch einen Haltezapfen, der in ein Trägerbauteil eingesetzt ist und
- Figur 3: die Unterseite eines Trägerbauteils mit Schenkelfedern in perspektivischer Ansicht.

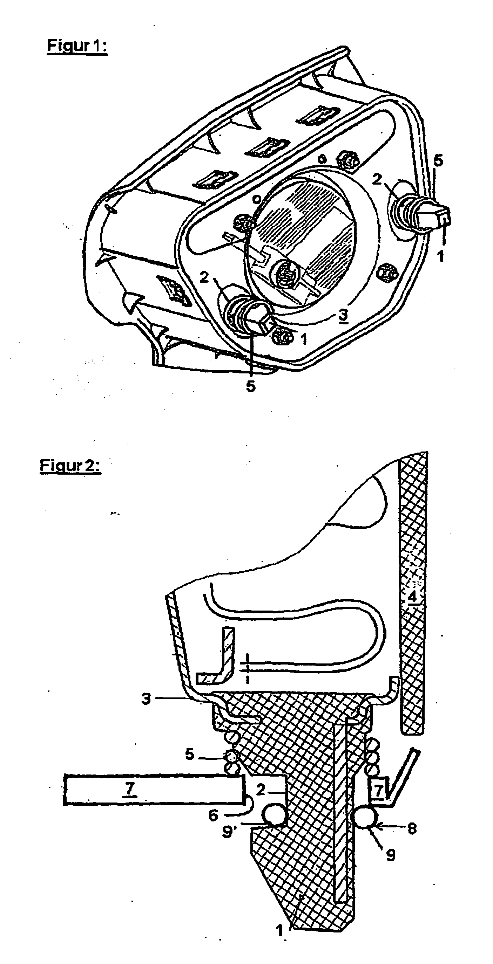

Es sind in Figur 1 zwei Haltezapfen 1 an der Gehäuserückwand 3 des Airbagmodulgehäuses 4 symmetrisch angeordnet. Die Rastnuten 2 weisen nach innen, so dass sich die Rastnuten gegenüberliegen. Auf der Seite, auf welcher die Rastnut im Haltezapfen angeordnet ist, ist das vordere freie Ende des Haltezapfens 1 keilartig abgeschrägt. Auf die Haltezapfen ist jeweils eine Schraubenfeder 5 aufgesetzt, welche mit ihrem einen Ende an der Gehäuserückwand 3 des Airbagmodulgehäuses 4 anliegt. Die Kraftrichtung der Schraubenfeder 5 wirkt parallel zur Längsachse der Haltezapfen 1, so dass das eingesetzte Airbagmodulgehäuse gegen das in dieser Figur nicht dargestellte Trägerbauteil 7 verspannt ist.

Das Trägerbauteil 7 ist in Figur 2 schematisch dargestellt. Es ist hier der Haltezapfen 1 in die Aufnahmeöffnung 6 des Trägerbauteils 7 eingesetzt. Die Schenkelfeder 8 liegt mit ihrem feststehenden Schenkel 9 und ihrem beweglichen Schenkel 9' am Haltezapfen an, wobei der Schenkel 9' in die Rastnut 2 des Haltezapfens 1 eingreift und somit die Befestigung des Airbagmodulgehäuses 4 an dem Trägerbauteil 7 bewirkt. Der bewegliche Schenkel 9' ist bei der Montage des Airbagmodulgehäuses 4 über die auf der Seite der Rastnut 2 am Haltezapfen 1 angeordnete schräge Ebene am Haltezapfen 1 parallel zum Trägerbauteil 7 gespreizt und in die Rastnut 2 geführt worden. Die Schraubenfeder 5 ist zwischen der Gehäuserückwand 3 des Airbaggehäuses 4 und dem Trägerbauteil 7 verspannt.

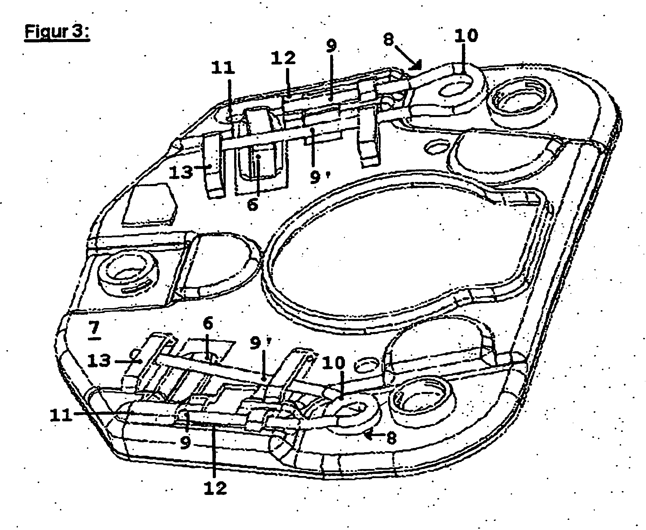

Die Schenkelfedern 8 sind an dem Trägerbauteil 7 mit ihrem feststehendem Schenkel 9 befestigt. Hierfür wird dieser, wie in Figur 3 dargestellt, in eine Kombination aus Aufnahmetaschen 11 und Gegentaschen 12 eingeschoben, welche dann gegeneinander verprägt werden. Der bewegliche Schenkel 9' wird durch aus dem Trägerbauteil 7 verprägten Führungsbügeln 13 in seiner Bewegungsrichtung festgelegt. Der bewegliche Schenkel 9' kann somit nicht in Richtung der Längsachse der Haltezapfen 1 beim Einsetzen derselben in die Aufnahmeöffnungen 6 bewegt werden. Die Schenkelfeder weist an ihrem einen Ende eine Federdoppelwicklung 10 auf, welche die beiden Federschenkel 9 und 9' miteinander verbindet und die Federkraft bewirkt.

### Bezugszeichenliste

- Haltezapfen: (1)
- Rastaussparung: (2)
- Gehäuserückwand: (3)
- Airbagmodulgehäuses: (4)
- Federkörper: (5)
- Aufnahmeöffnungen: (6)
- Trägerbauteil: (7)
- Schenkelfedern: (8)
- Feststehender Schenkel: (9)
- Beweglicher Schenkel: (9')
- Feder-Doppelwicklung: (10)
- Aufnahmetaschen: (11)
- Gegentaschen: (12)
- Führungsbügel: (13)

## Patentansprüche

1. Mittel zur lösbaren Befestigung eines Airbagmoduls am Kraftfahrzeug mit an der Gehäuserückwand (3) des Airbagmoduls angeordneten mit einer Rastaussparung (2) versehenen Haltezapfen (1) mit in Richtung der Längsachse der Haltezapfen (1) wirkenden Federkörpern (5), die um die Haltezapfen (1) angeordnet sind, wobei geeignete Aufnahmeöffnungen (6) für die Haltezapfen (1) in einem Trägerbauteil (7) des Kraftfahrzeugs angeordnet sind und auf der Unterseite des Trägerbauteils (7) an den Aufnahmeöffnungen (6) Schenkelfedern (8) befestigt sind, wobei diese Schenkelfedern (8) einen feststehenden an dem Trägerbauteil (7) befestigten Schenkel (9) und einen radial beweglichen, in die Rastaussparung (2) des Haltezapfens (1) eingreifenden Schenkel (9') aufweisen, **dadurch gekennzeichnet, dass** mindestens eine Aufnahmetasche (11) sowie mindestens zwei Gegentaschen (12) zur Befestigung des feststehenden Schenkels (9) der Schenkelfeder (8) in jeweils entgegengesetzter Richtung zueinander aus dem Trägerbauteil (7) verprägt bzw. ausgestellt sind.

2. Mittel zur lösbaren Befestigung eines Airbagmoduls nach Anspruch 1, **dadurch gekennzeichnet, dass** der in die Aufnahme- (11) bzw. Gegentasche (12) eingeführte Schenkel (9) der Schenkelfeder (8) durch Verprägung der Taschen (11, 12) gegeneinander kraft- und formschlüssig mit dem Trägerbauteil (7) verbunden ist.

3. Mittel zur lösbaren Befestigung eines Airbagmoduls nach Anspruch 1, **dadurch gekennzeichnet, dass** der Haltezapfen (1) eine keilartig abgeschrägte Vorderseite aufweist, und als Rastaussparung (2) eine Rastnut im Haltezapfen (1) angeordnet ist.

4. Mittel zur lösbaren Befestigung eines Airbagmoduls nach Anspruch 1, **dadurch gekennzeichnet, dass** als Federkörper (5) eine Schraubenfeder den Haltezapfen (1) umschließt.

5. Mittel zur lösbaren Befestigung eines Airbagmoduls nach Anspruch 1, **dadurch gekennzeichnet, dass** die auf der Unterseite des Trägerbauteils (7) angeordneten Schenkelfedern (8) mit in etwa parallelen Schenkeln (9, 9') U-förmig ausgebildet sind, wobei die Schenkel (9, 9') durch eine Federdoppelwicklung (10) der Schenkelfeder (8) miteinander verbunden sind.

6. Mittel zur lösbaren Befestigung eines Airbagmoduls nach Anspruch 1, **dadurch gekennzeichnet, dass** als Trägerbauteil (7) ein Trägerblech fest am Boden der Lenkradnabe montiert ist.

7. Mittel zur lösbaren Befestigung eines Airbagmoduls nach Anspruch 1, **dadurch gekennzeichnet, dass** die Bewegungsebene des radial beweglichen Schenkels (9') der Schenkelfeder (8) senkrecht zur Montagerichtung des Airbagmodulgehäuses (4) ist.

8. Mittel zur lösbaren Befestigung eines Airbagmoduls nach Anspruch 1, **dadurch gekennzeichnet, dass** der radial bewegliche Schenkel (9') der Schenkelfeder (8) von mindestens einem an dem Trägerbauteil (7) angeordneten Führungsbügel (13) geführt wird.

9. Mittel zur lösbaren Befestigung eines Airbagmoduls nach Anspruch 8, **dadurch gekennzeichnet, dass** der Führungsbügel (13) streifenförmig aus dem Trägerbauteil (7) verprägt bzw. ausgestellt ist.

10. Mittel zur lösbaren Befestigung eines Airbagmoduls nach Anspruch 1, **dadurch gekennzeichnet, dass** die Haltezapfen (1) mit schwingungsdämpfendem Kunststoff ummantelt sind.

11. Mittel zur lösbaren Befestigung eines Airbagmoduls nach Anspruch 1, **dadurch gekennzeichnet, dass** die Haltezapfen (1) komplett aus hochfestem Kunststoff ausgebildet sind.

12. Mittel zur lösbaren Befestigung eines Airbagmoduls nach Anspruch 1, **dadurch gekennzeichnet, dass** an der Gehäuserückwand (3) des Airbagmodulgehäuses (4) zwei Haltezapfen (1) symmetrisch und mit deren Rastaussparungen (2) innenliegend angeordnet sind.

13. Mittel zur lösbaren Befestigung eines Airbagmoduls nach Anspruch 1, **dadurch gekennzeichnet, dass** die Schenkelfedern (8) mit ihrem feststehenden Schenkel (9) außenliegend und mit ihrem beweglichen Schenkel (9') innenliegend auf der Unterseite des Trägerbauteils (7) befestigt sind, wobei die Bewegung der innenliegenden Schenkel (9') bei der Montage des Airbagmodulgehäuses (4) zur Mitte des Trägerbauteils (7) gerichtet ist.

14. Mittel zur lösbaren Befestigung eines Airbagmoduls nach Anspruch 1, **dadurch gekennzeichnet, dass** Service-öffnungen zu den auf der Unterseite des Trägerbauteils (7) befestigten Schenkelfedern (8), beispielsweise auf der Lenkradrückseite, zur Demontage des Airbagmodulgehäuses (4) angeordnet sind.

15. Mittel zur lösbaren Befestigung eines Airbagmoduls nach Anspruch 14, **dadurch gekennzeichnet, dass** die Serviceöffnungen zu den Schenkelfedern (8) mit einem Verschluss versehen sind.

16. Mittel zur lösbaren Befestigung eines Airbagmoduls nach Anspruch 15, **dadurch gekennzeichnet, dass** als Verschluss ein nur durch Spezialwerkzeug zu öffnender Verschlusskörper in die Serviceöffnung eingesetzt ist.

17. Mittel zur lösbaren Befestigung eines Airbagmoduls nach Anspruch 15, **dadurch gekennzeichnet, dass** die Serviceöffnungen zu den Schenkelfedern (8) durch Ausspritzen mit Kunststoff verschlossen sind.

## Claims

1. Means for detachably fastening an airbag module to the motor vehicle comprising retaining pins (1), which are disposed on the housing rear wall (3) of the airbag module and provided with a detent recess (2), and spring bodies (5) which act in the direction of the longitudinal axis of the retaining pins (1) and which are disposed around the retaining pins (1), wherein suitable receiving openings (6) for the retaining pins (1) are disposed in a carrier component (7) of the motor vehicle and leg springs (8) are fastened to the receiving openings (6) on the underside of the carrier component (7), wherein said leg springs (8) comprise a fixed leg (9), which is fastened to the carrier component (7), and a radially movable leg (9'), which engages into the detent recess (2) of the retaining pin (1), **characterized in that** at least one receiving pocket (11) and at least two counterpart pockets (12) for fastening the fixed leg (9) of the leg spring (8) are respectively stamped or set out from the carrier component (7) in, in each case, opposite directions to one another.

2. Means for detachably fastening an airbag module according to claim 1, **characterized In that** the leg (9) of the leg spring (8) that is introduced into the receiving pocket (11) and/or counterpart pocket (12) is connected in force - and form-locking manner to the carrier component (7) by pressing the pockets (11, 12) towards one another.

3. Means for detachably fastening an airbag module according to claim 1, **characterized in that** the retaining pin (1) has a front side chamfered in a wedge-like manner, and as detent recess (2) a detent groove is disposed in the retaining pin (1).

4. Means for detachably fastening an airbag module according to claim **1, characterized in that,** as spring body (5), a helical spring surrounds the retaining pin (1).

5. Means for detachably fastening an airbag module according to claim 1, **characterized in that** the leg springs (8) disposed on the underside of the carrier component (7) and having approximately parallel legs (9, 9') are of a U-shaped design, wherein the legs (9, 9') are connected to one another by a spring double winding (10) of the leg spring (8).

6. Means for detachably fastening an airbag module according to claim 1, **characterized in that,** as carrier component (7), a carrier plate is mounted firmly on the base of the steering wheel hub.

7. Means for detachably fastening an airbag module according to claim 1, **characterized in that** the plane of motion of the radially movable leg (9') of the leg spring (8) is at right angles to the direction of installation of the airbag module housing (4).

8. Means for detachably fastening an airbag module according to claim 1, **characterized in that** the radially movable leg (9') of the leg spring (8) is guided by at least one guide bracket (13) disposed on the carrier component (7).

9. Means for detachably fastening an airbag module according to claim 8, **characterized in that** the guide bracket (13) is stamped and/or set out in the shape of a strip from the carrier component (7).

10. Means for detachably fastening an airbag module according to claim 1, **characterized in that** the retaining pins (1) are covered with vibration-damping plastics material.

11. Means for detachably fastening an airbag module according to claim 1, **characterized in that** the retaining pins (1) are formed completely from high-strength plastics material.

12. Means for detachably fastening an airbag module according to claim 1, **characterized in that** on the housing rear wall (3) of the airbag module housing (4) two retaining pins (1) are disposed symmetrically and with their detent recesses (2) lying at the inside.

13. Means for detachably fastening an airbag module according to claim 1, **characterized in that** the leg springs (8) are fastened on the underside of the carrier component (7) with their fixed leg (9) lying at the outside and with their movable leg (9') lying at the inside, wherein the movement of the inner-lying legs (9') during installation of the airbag module housing (4) is directed towards the centre of the carrier component (7).

14. Means for detachably fastening an airbag module according to claim 1, **characterized in that** servicing openings to the leg springs (8) fastened on the underside of the carrier component (7) are disposed, for example at the rear of the steering wheel, for removal of the airbag module housing (4).

15. Means for detachably fastening an airbag module according to claim 14, **characterized in that** the servicing openings to the leg springs (8) are provided with a closure.

16. Means for detachably fastening an airbag module according to claim 15, **characterized in that,** as a closure, a closing body openable only with a special tool is inserted into the servicing opening.

17. Means for detachably fastening an airbag module according to claim 15, **characterized in that** the servicing openings to the leg springs (8) are closed by injection with plastics material.

## Revendications

1. Moyen pour la fixation amovible d'un module d'airbag ou coussin gonflable dans un véhicule automobile, comportant des tétons de blocage (1) agencés contre la paroi arrière (3) du boîtier (4) du module d'airbag et munis d'un évidement d'encliquetage (2), comportant des corps de ressort (5) agissant dans la direction de l'axe longitudinal des tétons de blocage (1) et disposés autour des tétons de blocage (1), des orifices de réception (6) appropriés, pour les tétons de blocage (1), étant disposés dans une pièce de support (7) du véhicule automobile et des ressorts à branches (8) étant fixés sur la face inférieure de la pièce de support (7) au niveau des orifices de réception (6), ces ressorts à branches (8) comportant une branche fixe (9), fixée sur la pièce de support (7), et une branche (9') radialement mobile, s'engageant dans l'évidement d'encliquetage (2) du téton de blocage (1), **caractérisé en ce qu'**au moins une poche de réception (11), ainsi qu'au moins deux poches inversées (12), destinées à la fixation de la branche fixe (9) du ressort à branches (8), sont pressées ou découpées respectivement en direction opposée l'une à l'autre dans la pièce de support (7).

2. Moyen pour la fixation amovible d'un module d'airbag selon la revendication 1, **caractérisé en ce que** la branche (9) du ressort à branches (8), introduite dans la poche de réception (11) ou la poche Inversée (12), est assemblée par liaison à force et de forme avec la pièce de support (7) sous l'effet du pressage des poches (11, 12) l'une contre l'autre.

3. Moyen pour la fixation amovible d'un module d'airbag selon la revendication 1, **caractérisé en ce que** le téton de blocage (1) comporte une face avant chanfreinée en forme de clavette et **en ce qu'**une rainure d'encliquetage est disposée dans le téton de blocage (1) comme évidemment d'encliquetage (2).

4. Moyen pour la fixation amovible d'un module d'airbag selon la revendication 1, **caractérisé en ce que** le corps de ressort (5) sous forme de ressort hélicoïdal entoure le téton de blocage (1).

5. Moyen pour la fixation amovible d'un module d'airbag selon la revendication 1, **caractérisé en ce que** les ressorts à branches (8), agencés sur la face inférieure de la pièce de support (7), sont réalisés en forme de U avec des branches (9, 9') sensiblement parallèles, **en ce que** les branches (9, 9') sont assemblées l'une à l'autre par un double enroulement (10) de ressort.

6. Moyen pour la fixation amovible d'un module d'airbag selon la revendication 1, **caractérisé en ce que** la pièce de support (7) sous forme de tôle de support est montée fermement sur le fond du moyeu du volant de direction.

7. Moyen pour la fixation amovible d'un module d'airbag selon la revendication 1, **caractérisé en ce que** le plan de mobilité de la branche (9') radialement mobile du ressort à branches (8) est perpendiculaire à la direction de montage du boîtier (4) du module d'airbag.

8. Moyen pour la fixation amovible d'un module d'airbag selon la revendication 1, **caractérisé en ce que** la branche (9') radialement mobile du ressort à branches (8) est guidée par au moins un étrier de guidage (13) agencé contre la pièce de support (7).

9. Moyen pour la fixation amovible d'un module d'airbag selon la revendication 8, **caractérisé en ce que l'**étrier de guidage (3) est pressé ou découpé en forme de bande dans la pièce de support (7).

10. Moyen pour la fixation amovible d'un module d'airbag selon la revendication 1, **caractérisé en ce que** les tétons de blocage (1) sont entourés d'une gaine en matière plastique amortissant les vibrations.

11. Moyen pour la fixation amovible d'un module d'airbag selon la revendication 1, **caractérisé en ce que** les tétons de blocage (1) sont entièrement réalisés en matière plastique à résistance élevée.

12. Moyen pour la fixation amovible d'un module d'airbag selon la revendication 1, **caractérisé en ce que** deux tétons de blocage (1) sont agencés symétriquement sur la paroi arrière (3) du boîtier (4) du module d'airbag et sont agencés vers l'intérieur avec leurs évidements d'encliquetage (2).

13. Moyen pour la fixation amovible d'un module d'airbag selon la revendication 1, **caractérisé en ce que** les ressorts à branches (8) sont fixés à l'extérieur avec leur branche fixe (9) et à l'intérieur avec leur branche mobile (9') sur la face inférieure de la pièce de support (7), le mouvement de la branche intérieure (9') étant orienté, au cours du montage du boîtier (4) du module d'airbag, vers le milieu de la pièce de support (7).

14. Moyen pour la fixation amovible d'un module d'airbag selon la revendication 1, **caractérisé en ce que** des orifices de service pour accéder aux ressorts à branches (8), fixés sur la face inférieure de la pièce de support (7), sont agencés par exemple sur la face arrière du volant de direction pour le démontage du boîtier (4) du module d'airbag.

15. Moyen pour la fixation amovible d'un module d'airbag selon la revendication 14, **caractérisé en ce que** les orifices de service pour accéder aux ressorts à branches (8) sont munis d'une fermeture.

16. Moyen pour la fixation amovible d'un module d'airbag selon la revendication 15, **caractérisé en ce que** la fermeture est formée par un corps de fermeture, qui est inséré dans l'orifice de service et qui ne peut être ouvert qu'au moyen d'un outil spécial.

17. Moyen pour la fixation amovible d'un module d'airbag selon la revendication 15, **caractérisé en ce que** les orifices de service pour accéder aux ressorts à branches (8) sont obturés par injection de matière plastique.
